# EUROPEAN PATENT APPLICATION

(11) **EP 4 672 816 A1**
(43) Date of publication of application: **31.12.2025**
(21) Application number: 23923419.8
(22) Date of filing: 24.02.2023
(51) Int. Cl.: H04W 36/00

(54) **WIRELESS COMMUNICATION METHOD AND APPARATUS**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN); HU, Yi, Dongguan, Guangdong 523860 (CN)
(74) Representative: Mewburn Ellis LLP
(86) International application number: PCT/CN2023/078201
(87) International publication number: WO 2024/174243

(57) **Abstract**

A wireless communication method and apparatus are provided. The method includes the following. A first terminal device performs a first operation when a first condition is met, where the first operation is related to a process of accessing a network device by the first terminal device through a first relay device. The first condition is associated with first location information and/or first time information. The first location information indicates location information of the first terminal device in a serving cell. The first time information indicates time information when the serving cell serves or stops serving the first terminal device. In embodiments of the disclosure, the first terminal device can perform multiple operations involved in a sidelink relay process from the first terminal device to the network based on the first location information and/or the first time information, thereby reducing the influence of the inability of the measurement based on signal quality to accurately reflect the near-far effect, and facilitating better application to the sidelink relay process in the NTN cell.

## Description

### TECHNICAL FIELD

The disclosure relates to the field of communication technology, and in particular, to a wireless communication method and apparatus.

### BACKGROUND

Some communication systems, such as new radio (NR) systems, support sidelink relay from a terminal device to a network. During the sidelink relay from the terminal device to the network, the terminal device may need to perform multiple operations, such as relay discovery, relay selection, etc.

In terrestrial networks, the above operations are performed based on the measurement of signal quality, for example, the measurement of reference signal receiving power (RSRP). However, in non-terrestrial networks (NTNs), the signal quality of the NTN cell cannot accurately reflect the near-far effect, which results in that the measurement based on signal quality may no longer be applicable to NTN communication.

### SUMMARY

The disclosure provides a wireless communication method and apparatus. The following introduces various aspects of the disclosure.

In a first aspect, a wireless communication method is provided. The method includes the following. A first terminal device performs a first operation when a first condition is met, where the first operation is related to a process of accessing a network device by the first terminal device through a first relay device. The first condition is associated with first location information and/or first time information. The first location information indicates location information of the first terminal device in a serving cell. The first time information indicates time information when the serving cell serves or stops serving the first terminal device.

In a second aspect, a wireless communication method is provided. The method includes the following. A first relay device performs a second operation when a second condition is met, where the second operation is related to a process of accessing a network device by a first terminal device through the first relay device. The second condition is associated with second location information. The second location information indicates location information of the first relay device in a serving cell.

In a third aspect, a terminal device is provided. The terminal device is a first terminal device and includes an execution module. The execution module is configured to perform a first operation when a first condition is met, where the first operation is related to a process of accessing a network device by the first terminal device through a first relay device. The first condition is associated with first location information and/or first time information. The first location information indicates location information of the first terminal device in a serving cell. The first time information indicates time information when the serving cell serves or stops serving the first terminal device.

In a fourth aspect, a relay device is provided. The relay device is a first relay device and includes an execution module. The execution module is configured to perform a second operation when a second condition is met, where the second operation is related to a process of accessing a network device by a first terminal device through the first relay device. The second condition is associated with second location information. The second location information indicates location information of the first relay device in a serving cell.

In a fifth aspect, a terminal device is provided. The terminal device includes a processor and a memory. The memory is configured to store one or more computer programs. The processor is configured to invoke the computer programs in the memory to cause the terminal device to perform part or all of the steps in the method of the first aspect.

In a sixth aspect, a relay device is provided. The relay device includes a processor and a memory. The memory is configured to store one or more computer programs. The processor is configured to invoke the computer programs in the memory to cause the relay device to perform part or all of the steps in the method of the second aspect.

In a seventh aspect, embodiments of the disclosure provide a communication system. The communication system includes the terminal device and/or the relay device mentioned above. In another possible design, the system may also include other devices that interact with the terminal device or the relay device in the solution provided in embodiments of the disclosure.

In an eighth aspect, embodiments of the disclosure provide a computer-readable storage medium. The computer-readable storage medium stores computer programs operable with a terminal device or a relay device to perform part or all of the steps in the methods of the above aspects.

In a ninth aspect, embodiments of the disclosure provide a computer program product. The computer program product includes a non-transitory computer-readable storage medium storing computer programs. The computer programs are operable with a terminal device or a relay device to perform part or all of the steps in the methods of the above aspects. In some implementations, the computer program product can be a software installation package.

In the tenth aspect, embodiments of the disclosure provide a chip. The chip includes a memory and a processor. The processor can invoke and execute computer programs from the memory to perform part or all of the steps in the methods of the above aspects.

In embodiments of the disclosure, the first terminal device can perform multiple operations (first operation) involved in a sidelink relay process from the first terminal device to the network based on the first location information and/or the first time information. That is, in embodiments of the disclosure, the first location information and/or the first time information can be combined to reduce the influence of the inability of the measurement based on signal quality to accurately reflect the near-far effect, thereby facilitating better application to the sidelink relay process in the NTN cell.

### BRIEF DESCRIPTION OF THE DRAWINGS

FIG. 1 is a diagram of an example system architecture of a wireless communication system to which embodiments of the disclosure are applicable.
FIG. 2 is a diagram of an example transparent payload NTN network architecture.
FIG. 3 is a diagram of an example regenerative payload NTN network architecture.
FIG. 4 is a schematic flowchart of a wireless communication method provided in an embodiment of the disclosure.
FIG. 5 is a schematic flowchart of a wireless communication method provided in another embodiment of the disclosure.
FIG. 6 is a schematic flowchart of a wireless communication method provided in another embodiment of the disclosure.
FIG. 7 is a schematic flowchart of a wireless communication method provided in another embodiment of the disclosure.
FIG. 8 is a schematic structural diagram of a terminal device provided in embodiments of the disclosure.
FIG. 9 is a schematic structural diagram of a relay device provided in embodiments of the disclosure.
FIG. 10 is a schematic structural diagram of a communication apparatus provided in embodiments of the disclosure.

### DETAILED DESCRIPTION

To facilitate understanding of the technical solutions of embodiments of the disclosure, a brief introduction to the related technologies of the disclosure is first given.

### Communication system architecture

The technical solutions of embodiments of the disclosure are applicable to various communication systems, for example, a global system of mobile communication (GSM), a code division multiple access (CDMA) system, a wideband code division multiple access (WCDMA) system, a general packet radio service (GPRS) system, a long term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area networks (WLAN), a wireless fidelity (Wi-Fi), a 5th-generation (5G) system, or other communication systems, for example, future communication systems, such as a 6th-generation (6G) mobile communication system, or a satellite communication system.

Generally speaking, a conventional communication system generally supports a limited number of connections and therefore is easy to implement. However, with development of communication technology, a mobile communication system will not only support conventional communication but also support, for example, device to device (D2D) communication, machine to machine (M2M) communication, machine type communication (MTC), and vehicle to vehicle (V2V) communication, or vehicle to everything (V2X) communications, and the like. Embodiments of the disclosure may also be applied to these communication systems.

A communication system in embodiments of the disclosure may be applied to a carrier aggregation (CA) scenario, a dual connectivity (DC) scenario, or a standalone (SA) network deployment scenario, such as a NR standalone deployment scenario.

The communication system in embodiments of the disclosure is applicable to an unlicensed spectrum, and an unlicensed spectrum may be regarded as a shared spectrum. Alternatively, the communication system in embodiments of the disclosure is applicable to a licensed spectrum, and a licensed spectrum may be regarded as a dedicated spectrum.

Embodiments of the disclosure are applicable to NTN systems and terrestrial network (TN) systems. By way of explanation rather than limitation, the NTN system includes an NR-based NTN system and an internet of things (IoT)-based NTN system. Exemplarily, in the scenario where narrowband internet of things (NB-IoT) and enhanced machine type communication (eMTC) access NTN, a system composed of IoT terminal devices and NTN networks can be understood as an IoT-based NTN system.

Embodiments of the disclosure have been described in connection with the network device and the terminal device. The terminal device may also be referred to as a user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user apparatus.

In embodiments of the disclosure, the terminal device may be a station (ST) in a WLAN, a cellular radio telephone, a cordless telephone, a session initiation protocol (SIP) telephone, a wireless local loop (WLL) station, a personal digital assistant (PDA), a handheld device with wireless communication functions, a computing device, other processing devices coupled with a wireless modem, an in-vehicle device, a wearable device, and a next-generation communication system, for example, a terminal device in an NR network, a terminal device in a future evolved public land mobile network (PLMN), etc.

In embodiments of the disclosure, the terminal device may refer to a device that provides voice and/or data connectivity to a user and may be configured to connect people, objects, and machines, such as a handheld device or vehicle-mounted device with a wireless connection function, etc. The terminal device in embodiments of the disclosure may be a mobile phone, a pad, a laptop computer, a handheld computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc. Optionally, the terminal device may be configured to act as a base station. For example, the terminal device may act as a scheduling entity that provides sidelink signals between terminal devices in V2X or D2D, etc. For example, a cellular phone and a car communicate with each other using sidelink signals. The cellular phone and a smart home device communicate with each other without relaying the communication signal via a base station.

The network device in embodiments of the disclosure may be a device for communicating with the terminal device, and the network device may also be referred to as an access network device or a wireless access network device, e.g., the network device may be a base station. The network device in embodiments of the disclosure may refer to a radio access network (RAN) node (or device) that accesses the terminal device to the wireless network. The base station may broadly cover the following various names, or be replaced with the following names, such as, node B (NodeB), evolved NodeB (eNB), next generation NodeB (gNB), relay station, access point, transmitting and receiving point (TRP), transmitting point (TP), master station (MeNB), secondary station (SeNB), multi-standard radio (MSR) node, home base station, network controller, access node, wireless node, access point (AP), transmission node, transceiver node, base band unit (BBU), remote radio unit (RRU), active antenna unit (AAU), remote radio head (RRH), central unit (CU), distributed unit (DU), positioning node, etc. The base station may be a macro base station, a micro base station, a relay node, a donor node, or the like, or a combination thereof. The base station may also refer to a communication module, a modem or a chip configured to be set in the aforementioned device or apparatus. The base station may also be a mobile switching center, a device that performs the base station function in device-to-device (D2D), vehicle-to-everything (V2X), and machine-to-machine (M2M) communications, a network-side device in a 6G network, and a device that performs the base station function in future communication systems. The base stations may support networks of the same or different access technologies. The specific technology and specific device form adopted by the network device are not limited in embodiments of the disclosure.

Base stations may be fixed or mobile. For example, a helicopter or drone may be configured to act as a mobile base station, and one or more cells may move based on the location of the mobile base station. In other examples, a helicopter or drone may be configured to function as a device for communicating with another base station.

In some deployments, the network device in embodiments of the disclosure may refer to a CU or a DU, or the network device includes a CU and a DU. The gNB may also include an AAU.

The network device and the terminal device may be deployed on land, including indoors or outdoors, handheld or in-vehicle. The network device and the terminal device may also be deployed on the water. The network device and the terminal device may also be deployed in the air on aircraft, balloons and satellites. The scenario in which the network device and the terminal device are located is not limited in embodiments of the disclosure.

By way of explanation rather than limitation, in embodiments of the disclosure, the network device may be of mobility. For example, the network device may be a mobile device. In some embodiments of the disclosure, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. In some embodiments of the disclosure, the network device may also be a base station located on land, water, etc.

In embodiments of the disclosure, the network device can provide services for a cell, and the terminal device communicates with the network device through a transmission resource (for example, a frequency-domain resource or a spectrum resource) for the cell. The cell may be a cell corresponding to the network device (for example, a base station). The cell may correspond to a macro base station, and may correspond to a base station corresponding to a small cell. The small cell may include: a metro cell, a micro cell, a pico cell, a femto cell, and the like. These small cells are characterized by small coverage and low transmission power and are adapted to provide data transmission service with high-rate.

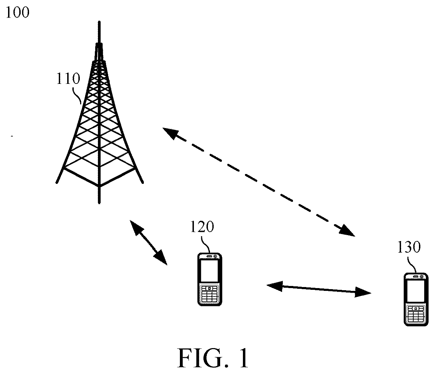

Exemplarily, FIG. 1 is a schematic diagram of an architecture of a communication system provided in embodiments of the disclosure. As illustrated in FIG. 1, a communication system 100 may include a network device 110, a terminal device 120, and a terminal device 130. The network device 110 may provide communication coverage for a specific geographical area, and may communicate with a terminal device located in the coverage area. In some embodiments, the network device may be, for example, a satellite. The terminal device 120 is located within the cell coverage of the network device 110. The terminal device 120 may communicate with the network device 110 via a Uu link (e.g., an uplink and a downlink). The terminal device 130 may be located within the cell coverage of the network device 110, or may be located outside the cell coverage of the network device 110. In some embodiments, the terminal device 130 may communicate with the network device 110 via the terminal device 120. In this case, a sidelink connection exists between the terminal device 130 and the terminal device 120. In some embodiments, in addition to communicating with the network device 110 via the terminal device 120, the terminal device 130 can also communicate with the network device 110 via a Uu link.

It should be understood that, in embodiments of the disclosure, the terminal device refers in particular to a terminal device capable of sidelink communication. Terminal devices capable of sidelink communication can be classified into two types: relay devices (e.g., the terminal device 120) and remote devices (e.g., the terminal device 130).

The relay device may refer to a terminal device that supports providing relay services. For example, the relay device 120 may provide relay services for the terminal device 130. In other words, the relay device has a relay function. Specifically, the relay device 120 may receive uplink data from the terminal device 130 and relay the uplink data to the network device 110, and may receive downlink data from the network device and relay the downlink data to the terminal device 130. The relay device may also be referred to as a relay terminal, a relay UE, etc., which is not limited in embodiments of the disclosure.

The remote device may refer to a terminal device that supports access to a network device through a relay service. The remote device may refer to a device outside the network coverage area or a device in an edge area of the network coverage area. The remote device may not be able to connect to the network device, or has a communication link with poor signal quality after connecting to the network device. The remote device may also be referred to as a remote terminal, remote UE, etc., which is not limited in embodiments of the disclosure.

FIG. 1 exemplarily illustrates one network device and two terminal devices. In some embodiments of the disclosure, the communication system 100 may also include multiple network devices, and there can be other numbers of terminal devices in a coverage area of each of the network devices. Embodiments of the disclosure are not limited in this regard.

It should be noted that, FIG. 1 merely illustrates a system to which the disclosure is applicable by way of example. Of course, the method illustrated in embodiments of the disclosure may also be applicable to other systems, such as a 5G communication system, an LTE communication system, a NTN communication system, etc., which is not limited in embodiments of the disclosure.

In some embodiments of the disclosure, the wireless communication system illustrated in FIG. 1 may also include other network entities, such as a mobility management entity (MME), an access and mobility management function (AMF), etc., which is not limited in embodiments of the disclosure.

### 5G Application Scenario

Currently, with people's pursuit of speed, latency, high-speed mobility, and energy efficiency, as well as diversity and complexity of services in future life, the 3rd generation partnership project (3GPP) international standard organization starts to develop 5G. Main application scenarios of 5G include enhanced mobile broadband (eMBB), ultra-reliable low latency communications (URLLC), and massive machine type communications (mMTC).

On the one hand, eMBB aims to provide a user with access to multimedia content, services, and data. The demand for eMBB is growing rapidly. In addition, since eMBB may be deployed in different scenarios, such as indoor, urban, or rural areas, its capabilities and requirements vary greatly. Therefore, applying a same standard to all is impractical, and a detailed analysis must be conducted with reference to a specific deployment scenario.

A key feature of URLLC is low latency. In an application scenario of URLLC, a connection latency may reach one millisecond or less, and a high-reliability connection in a case of high-speed movement may be supported. For example, during high-speed movement at a speed of 500 kilometers per hour, reliability may reach 99.999%. Typical applications of URLLC include industrial automation, electric power automation, remote medical operations (surgery), traffic safety guarantee, and the like.

Typical features of mMTC include high connection density, small data volume, delay-insensitive services, low costs, long service life of modules, and the like. Based on this, mMTC may include one or more of the following communications: communications of an industrial wireless sensor network, communications in a video surveillance scenario, and communications with a wearable device.

### Radio Resource Control (RRC) State

Currently, the protocol defines three RRC states of a terminal device: an RRC connected (RRC_CONNECTED) state, an RRC idle (RRC_IDLE) state, and an RRC inactive (RRC_INACTIVE) state.

The RRC connected state may be a state of the terminal device after completing a random access procedure but before performing an RRC release. An RRC connection exists between the terminal device and a network device, and a terminal device access stratum (AS) context exists in the network device and the terminal device. In the RRC connected state, data transmission, such as downlink data transmission and/or uplink data transmission, can be performed between the terminal device and the network device. Alternatively, transmission of a data channel and/or control channel specific to the terminal device can be performed between the terminal device and the network device, to transmit specific information or unicast information of the terminal device.

In the RRC connected state, the network device can determine cell-level location information of the terminal device; that is, the network device can determine a cell to which the terminal device belongs. In addition, the mobility management of the terminal device in the RRC connected state may be controlled by the network device. That is, the mobility of the terminal device in the RRC connected state is a mobility controlled by the network device.

The RRC idle state is a state of the terminal device when the terminal device camps on a cell but does not perform random access. The terminal device usually enters the RRC idle state after being powered on or after an RRC release. In the RRC idle state, there is no RRC connection between the terminal device and the network device, the network device does not store a AS context of the terminal device, and no connection is established for the terminal device between the network device and a core network. If the terminal device needs to enter the RRC connected state from the RRC idle state, it is required to initiate an RRC connection establishment process.

In the RRC idle state, the core network (CN) may transmit a paging message to the terminal device; that is, a paging process may be triggered by the CN. Optionally, a paging area may also be configured by the CN. The mobility management of the terminal device in the RRC idle state includes cell selection/cell reselection based on the terminal device.

The RRC inactive state is a new RRC state defined to reduce air interface signalling, quickly restore wireless connections, and quickly restore data services. The RRC inactive state is a state between the RRC connected state and the RRC idle state (that is, the RRC inactive state is different from the RRC connected state and the RRC idle state). The terminal device has previously entered the RRC connected state and then released the RRC connection with the network device, but the network device has stored the AS context of the terminal device. In addition, the connection established for the terminal device between the network device and the core network has not been released. In other words, a user plane bearer and a control plane bearer between the RAN and the CN are still maintained; that is, there is a CN-NR connection.

In the RRC inactive state, the RAN may transmit a paging message to the terminal device; that is, a paging process may be triggered by the RAN. An RAN-based paging area is managed by the RAN, and a location of the terminal device that can be learned by the network device is at the level of the RAN-based paging area. The mobility management of the terminal device in the RRC inactive state includes cell selection/cell reselection based on the terminal device.

### NTN

Currently, non-terrestrial network (NTN) technologies are studied by the 3rd generation partnership project (3GPP). NTN generally provides communication services to terrestrial users through satellite communication. Compared with terrestrial communication networks, for example, terrestrial cellular network communication, the satellite communication has many unique advantages.

First, the satellite communication is not constrained by areas of the users. For example, the terrestrial communication network is generally not able to cover areas where network devices cannot be set up, such as oceans, mountains, and deserts. Alternatively, the terrestrial communication network is not able to cover sparsely populated areas. In contrast, for the satellite communication, one satellite can cover a large ground area, and the satellite can orbit the earth, therefore, in theory, every corner on the earth can be covered by the satellite communication network.

Second, the satellite communication has high social value. Remote mountainous areas, poor and backward countries or regions can be covered for satellite communication at a low cost, so that people in these areas can enjoy advanced voice communication and mobile internet technologies. From this perspective, satellite communication is conducive to narrowing a digital gap with developed areas and promoting the development of these areas.

Third, a satellite has a long communication distance, and a communication cost thereof does not increase greatly with the increase of the communication distance.

Finally, the satellite communication has high stability and is not effected by natural disasters.

Communication satellites can be classified into LEO satellites, MEO satellites, GEO satellites, HEO satellites according to different orbital altitudes, and the like. Currently, the LEO satellite and the GEO satellite are mainly studied.

The orbital altitude of the LEO satellite is generally in the range of 500 km to 1500 km. Accordingly, an orbital period of the LEO satellite is about 1.5 hours to 2 hours. For the LEO satellite, signal propagation delay of single-hop communication between users is generally less than 20ms. A maximum visibility time corresponding to the LEO satellite is about 20 minutes. The LEO satellite has advantages of short signal propagation distance, low link loss, and low transmission power requirements for a terminal device.

The orbital altitude of the GEO satellite is about 35786 km. A rotation period around the earth of the GEO satellite is 24 hours. For the GEO satellite, signal propagation delay of single-hop communication between users is generally about 250 ms.

In order to ensure the coverage of the satellite and increase the system capacity of the entire satellite communication system, the satellite usually uses multi-beams to cover the ground area. Therefore, one satellite can provide dozens of or even hundreds of beams for ground area coverage, and one beam of the satellite can cover a ground area with a diameter of tens to hundreds of kilometers.

Currently, the NTN system can include the NR NTN system and the IoT NTN system.

### NTN Network Architecture

The NTN network architecture may include the following network elements: a gateway (GW), a feeder link, a service link, and a satellite.

The NTN network architecture may include one or more gateways. The one or more gateways may be used to connect satellites and terrestrial public networks. Generally, the gateway may be arranged on the ground.

The feeder link may refer to a link for communication between a gateway and a satellite.

The service link may refer to a link for communication between a terminal device and a satellite.

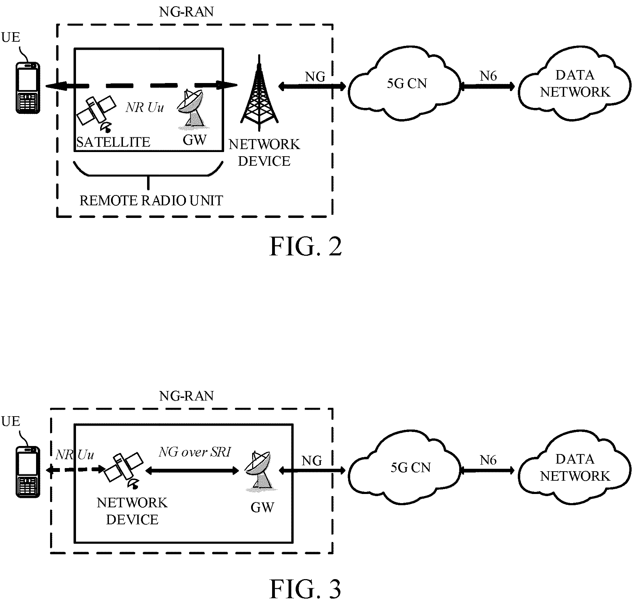

In terms of functions provided by satellites, satellites can be classified into transparent payload satellites and regenerative payload satellites. The transparent payload satellite means that the satellite only provides functions of radio frequency filtering, frequency conversion, and amplification. In other words, the transparent payload satellite only provides transparent payload of signals and does not change the waveform of the signal it forwards. The regenerative payload satellite means that in addition to the functions of radio frequency filtering, frequency conversion, and amplification, the satellite can also provide one or more of the following functions: demodulation, decoding, routing, conversion, encoding, modulation, etc. The regenerative payload satellite can have some or all of the functions of a base station. According to functions provided by satellites in NTN networks, NTN network architectures can be classified into transparent payload NTN network architectures and regenerative payload NTN network architectures. FIGs. 2 and 3 are respectively diagrams of an example transparent payload NTN network architecture and an example regenerative payload NTN network architecture. In the regenerative payload NTN network architecture, the terminal device can communicate with the satellite via an NR Uu interface. The satellite can communicate with the gateway via a satellite radio interface (SRI). The SRI can be used to transmit interface messages between the satellite and the core network.

In some embodiments, the NTN network architecture may further include an inter satellite link (ISL). For example, the ISL may exist in the regenerative payload NTN network architecture.

### Sidelink Relay

Some communication systems, such as NR systems, support sidelink relay from a terminal device to a network (or referred to as UE-to-network (U2N) sidelink relay). The communication system may support different sidelink relay modes (or relay types), for example, a layer 3 relay mode and/or a layer 2 relay mode.

The layer 3 relay mode has little impact on the network device, because in the layer 3 relay mode, the remote device is not registered with the network, and data is forwarded only through the session between the relay device and the network device. In this way, there is no direct connection between the remote device and the access network, and the core network does not need to perform mobility management and session management on the remote device. However, there are also some defects in the layer 3 relay mode, such as the possibility of service interruption, because the remote device is not registered with the network, and accordingly, the network cannot maintain a fixed user plane anchor for the remote device, which makes it easy for the remote device to have service interruption during movement.

The layer 2 relay mode is a relay mode where relay is performed at the AS. Compared with the layer 3 relay mode, the layer 2 relay mode makes greater changes to the terminal device and the network device. In the layer 2 relay mode, the relay device can provide relay between the remote device and the network device through the AS, and there is a direct connection between the remote device and the network device (for example, there is a direct RRC link). In addition, in the layer 2 relay mode, the remote device can be registered with the core network, and the core network can provide a user plane anchor for the remote device. Therefore, the layer 2 relay mode has better service continuity.

Before the remote device establishes a sidelink with a relay device, the remote device needs to find a suitable relay device nearby. This process is referred to as relay discovery. In some embodiments, relay discovery may include two models, i.e., model A and model B. In model A, the relay device may broadcast its own discovery message, and then the remote device interested in this message may read and process the message to determine whether a sidelink connection (or sidelink) can be established between the relay device and the remote device. In model B, the remote device may transmit a discovery message in the hope of receiving a response from a relay device, and a surrounding relay device may determine whether to respond after receiving the discovery message transmitted by the remote device, so as to further determine whether a sidelink connection can be established between the relay device and the remote device.

That is, during the sidelink relay process from the terminal device to the network, the relay device or the remote device can transmit a relay discovery message and monitor a relay discovery message on the sidelink. For example, in the case where the relay device transmits a relay discovery message and monitors a relay discovery message on the sidelink, the network device can configure a signal quality measurement threshold for the relay device, such as a Uu RSRP threshold, so that the relay device determines whether to transmit a relay discovery message to the remote device. In some embodiments, the measurement threshold configured by the network device may be a maximum measurement threshold or a minimum measurement threshold, or may include both the maximum measurement threshold and the minimum measurement threshold. In some embodiments, the measurement threshold may be broadcast by the network device, or may be configured by the network device through a dedicated signaling (e.g., an RRC dedicated signaling).

Before the remote device establishes a sidelink with a relay device, the remote device can determine when to trigger relay device selection, that is, when to connect or communicate with the relay device to communicate with the network device through the relay device. This process can be referred to as relay selection/reselection.

In some embodiments, the remote device may determine when to trigger relay device selection based on the measurement of signal quality. Specifically, the network device may broadcast a signal quality threshold corresponding to the Uu link (e.g., a Uu RSRP threshold). The remote device can determine whether to trigger relay device selection according to the threshold. The relay device selection is used for the remote device to connect or communicate with a relay device. In an implementation, the remote device can perform wireless measurement of a sidelink (or referred to as wireless measurement of a PC5 link/PC5 interface) based on the above signal quality threshold, so as to determine whether to trigger relay device selection based on the measurement result.

As can be seen, in the terrestrial network, during the sidelink relay process from the terminal device to the network, multiple operations (such as relay discovery, relay selection/reselection, etc.) performed by the terminal device are based on the measurement of signal quality, such as the measurement of RSRP. However, in NTNs, the signal quality of the NTN cell cannot accurately reflect the near-far effect, which results in that the measurement based on signal quality may no longer be applicable to NTN communication.

For example, for NTN relay selection, since the signal quality of the NTN cell cannot accurately reflect the near-far effect, if NTN relay selection is triggered based on the measurement of signal quality, the remote device may initiate the relay selection process too early or too late. If the remote device initiates the relay selection process too early, the remote device may attach to the relay device too early, which results in unnecessary consumption of side relay resources. If the remote device initiates the relay selection process too late, the remote device may use a poor Uu direct link when initiating a service request, which results in connection failure. In the NTN, the relay discovery process is similar to the relay selection process. If the relay discovery process is triggered based on the measurement of signal quality, the remote device or the relay device may initiate the relay discovery process too early or too late.

In conclusion, in the NTN cell, the measurement based on signal quality may no longer be applicable to NTN communication, and the sidelink relay process in the NTN needs to be adapted to the characteristics of NTN networks.

To solve the above problems, embodiments of the disclosure provide a wireless communication method and apparatus, which are applicable to the sidelink relay process in NTNs and may improve the rationality of NTN relay. The technical solutions of the disclosure are introduced below in combination with the accompanying drawings.

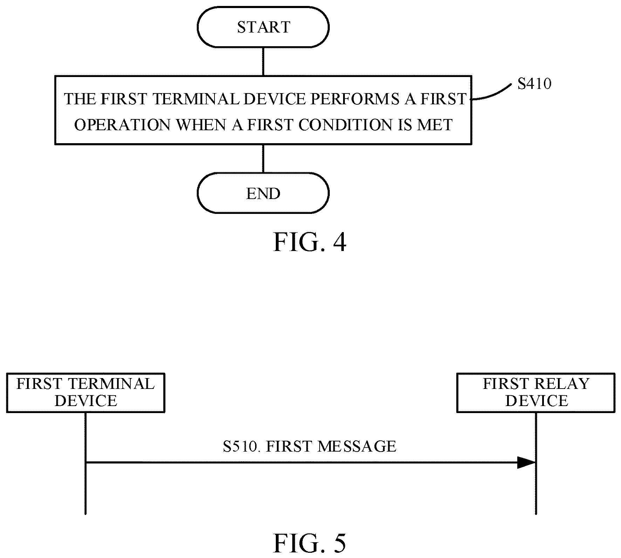

FIG. 4 is a schematic flowchart of a wireless communication method provided in an embodiment of the disclosure. The method illustrated in FIG. 4 may be performed by a first terminal device. The first terminal device may be, for example, a remote device, such as the terminal device 130 illustrated in FIG. 1. In some embodiments, the first terminal device may refer to a terminal device accessed to an NTN. The method illustrated in FIG. 4 may include S410, which is described below.

At S410, the first terminal device performs a first operation when a first condition is met.

The first operation is related to a process of accessing a network device by the first terminal device through a first relay device. In other words, the first operation is related to a sidelink relay process of accessing a network by the first terminal device. In other words, the first operation may refer to various operations involved in the sidelink relay process of accessing the network by the first terminal device.

In some embodiments, the first operation may refer to a relay discovery operation involved in the sidelink relay process of accessing the network by the first terminal device.

In some embodiments, the first operation may refer to a relay selection/reselection operation involved in the sidelink relay process of accessing the network by the first terminal device.

In some embodiments, the first operation may refer to other operations, such as measurement-related operations involved in the sidelink relay process except for the relay discovery operation and the relay selection/reselection operation.

In embodiments of the disclosure, the first condition is associated with first location information and/or first time information. The first location information and the first time information are introduced below respectively.

The first location information may indicate location information of the first terminal device in a serving cell. In other words, the first location information may indicate a relative location relationship between the first terminal device and the serving cell.

The serving cell may refer to a cell currently serving the first terminal device. In some embodiments, the serving cell may refer to an NTN cell, which is not limited in embodiments of the disclosure. In some embodiments, the serving cell may be a TN cell.

The specific indication manner of the first location information is not limited in embodiments of the disclosure, as long as the first location information can indicate the location information of the first terminal device in the serving cell.

In an implementation, the first location information may indicate the location information of the first terminal device in the serving cell through a distance between the first terminal device and the serving cell. Exemplarily, the first location information may include one or more of: a distance between the first terminal device and a reference point of the serving cell, a distance between the first terminal device and a satellite of the serving cell, a distance between the first terminal device and the network device, etc.

The setting of the reference point of the serving cell is not specifically limited in embodiments of the disclosure. For example, the reference point of the serving cell may refer to a center position of the serving cell, which is not limited in embodiments of the disclosure. In some embodiments, the reference point of the serving cell may refer to an edge position of the serving cell, or any other position of the serving cell.

In some embodiments, the shape of the serving cell may be irregular. In this case, when the reference point of the serving cell is the center position of the serving cell, the center position may refer to a geometric center position of the serving cell. In addition, when the shape of the serving cell is irregular, the edge position of the serving cell may correspond to multiple different edge positions. In this case, the edge position of the cell may refer to an edge position closest to the center position of the serving cell or an edge position farthest from the center position of the serving cell.

In some embodiments, the reference point of the serving cell may be predefined or preconfigured by a protocol. In some embodiments, the reference point of the serving cell may be configured by the network device. For example, the network device may configure the reference point of the serving cell through a higher-layer signaling or system information.

In another implementation, the first location information may indicate the location information of the first terminal device in the serving cell through the location of the first terminal device and the location of the serving cell. Exemplarily, the first location information may include location information of the first terminal device and/or location information of the serving cell.

The location information of the first terminal device may be, for example, absolute geographic location information, such as longitude and latitude. The location information of the serving cell may, for example, refer to location information of the reference point of the serving cell or location information of the satellite of the serving cell. The location information of the reference point of the serving cell or the location information of the satellite of the serving cell may also be absolute geographic location information. In this way, the relative location relationship between the first terminal device and the serving cell may be calculated based on the location information of the first terminal device and the location information of the serving cell. That is, the location information of the first terminal device in the serving cell can be obtained.

It should be understood that the distance mentioned above may refer to a straight-line distance or other types of distances, which is not limited in embodiments of the disclosure.

The first time information may indicate time information when the serving cell serves or stops serving the first terminal device. In other words, the first time information may indicate a remaining coverage time of the serving cell, that is, a remaining time for which the serving cell can provide services for the first terminal device.

Exemplarily, in a communication scenario where the distance between the first terminal device and the network device is constantly changing, or in a scenario where the network device or the terminal device is moving, for example, in an NTN communication scenario where the network device is moving at high speed, the coverage of the serving cell will change. Assume that the coverage of the serving cell at moment 1 is coverage A, and as the network device moves, its coverage may be coverage B at moment 2. Then, when the terminal device is stationary within coverage A, there is a remaining coverage time of the serving cell.

In some embodiments, the time information when the serving cell serves or stops serving the first terminal device may refer to time information when the serving cell serves or stops serving a current coverage area of the serving cell. For example, the serving cell is an NTN cell, assume that the serving cell is a quasi-earth fixed NTN cell, and the coverage area of the serving cell may remain unchanged within a time period. In this case, the time information when the serving cell serves or stops serving the first terminal device may refer to time information when the serving cell serves or stops serving the current coverage area of the serving cell.

In some embodiments, the time information when the serving cell serves or stops serving the first terminal device may refer to time information when the serving cell serves or stops serving a current location of the first terminal device. For example, the serving cell is an NTN cell, assume that the serving cell is an earth moving NTN cell, and the coverage of the serving cell keeps moving with the movement of the satellite. In this case, the time information when the serving cell serves or stops serving the first terminal device may refer to time information when the serving cell serves or stops serving the current location of the first terminal device.

In some embodiments, the first time information may refer to a relative time. For example, the first time information may be a remaining time for which the serving cell can provide services for the first terminal device, that is, how long the serving cell can still cover the first terminal device. In a specific example, the first time information may be 30 minutes, which indicates that the remaining time for which the serving cell can still provide services for the first terminal device is 30 minutes.

In some embodiments, the first time information may refer to an absolute time. For example, the first time information may be a last moment at which the serving cell can provide services for the first terminal device, or the first time information may be a moment when the serving cell stops serving the first terminal device. In a specific example, the first time information may be 12:00:00 on February 23, 2023, which indicates that the serving cell can provide services for the first terminal device before 12:00:00 on February 23, 2023, and cannot provide services for the first terminal device temporarily after this time.

It should be noted that when the first time information is an absolute time, the form of the first time information is not specifically limited in embodiments of the disclosure. For example, the first time information may be in the form of a coordinated universal time (UTC), or system frame number, subframe number, time slot number, symbol, etc.

In embodiments of the disclosure, the first terminal device can perform multiple operations (first operation) involved in a sidelink relay process from the first terminal device to the network based on the first location information and/or the first time information. That is, in embodiments of the disclosure, the first location information and/or the first time information can be combined to reduce the influence of the inability of the measurement based on signal quality to accurately reflect the near-far effect, thereby facilitating better application to the sidelink relay process in the NTN cell.

In some embodiments, in addition to being associated with the first location information and/or the first time information, the first condition may also be associated with other information. For example, the first condition may also be associated with signal quality information, such as signal quality information measured by the first terminal device or signal quality information to be measured by the first terminal device.

Exemplarily, the first condition may be associated with signal quality information of a first link measured by the first terminal device, and the first link is a direct link between the first terminal device and the network device.

The type of signal quality information is not limited in embodiments of the disclosure. In some embodiments, the signal quality information may include, for example, RSRP information. In some embodiments, the signal quality information may include reference signal receiving quality (RSRQ) information, signal to interference noise ratio (SINR) information, etc.

In this way, in embodiments of the disclosure, the measurement based on signal quality and the measurement based on location and/or time can be combined to improve the rationality of the sidelink relay process in the NTN cell.

Based on the above introduction, the following takes the first operation including the relay discovery operation and the relay selection/reselection operation as an example to exemplarily introduce the first operation performed by the first terminal device based on the first condition.

### Relay Discovery

FIG. 5 is a schematic flowchart of a wireless communication method provided in another embodiment of the disclosure. Referring to FIG. 5, S410 may include S510. At S510, the first terminal device transmits a first message to the first relay device or the first terminal device monitors the first message, when the first condition is met. The first message is used for the first terminal device to discover the first relay device. In other words, the first terminal device discovers the first relay device when the first condition is met.

In some embodiments, the first message may also be referred to as a relay discovery message, a relay discovery request message, etc., which is not limited in embodiments of the disclosure.

In some embodiments, after transmitting the first message to the first relay device, the first terminal device expects to receive a response from the relay device. A relay device around the first terminal device can determine whether to respond after receiving the discovery message from the first terminal device, so as to further determine whether a sidelink connection can be established between the relay device and the first terminal device.

In some embodiments, the first terminal device may monitor the first message from surrounding relay devices, and then respond to a relay device of interest, so as to subsequently determine whether a sidelink connection can be established between the relay device and the first terminal device.

During the relay discovery process, the first condition may include a related condition associated with the first location information. For example, the first condition may include one or more of: a distance between the first terminal device and a reference point of the serving cell being greater than or equal to a first threshold, or a distance between the first terminal device and a satellite of the serving cell being greater than or equal to a second threshold.

The value of the first threshold and/or the value of the second threshold are not specifically limited in embodiments of the disclosure, and can be flexibly set according to actual needs.

In some embodiments, the value of the first threshold and the value of the second threshold may be the same. In some embodiments, the value of the first threshold and the value of the second threshold may be different, which is not limited in embodiments of the disclosure.

In some embodiments, the first threshold and/or the second threshold may be configured by the network device, for example, configured by the network device through system information or a dedicated signaling, which is not limited in embodiments of the disclosure. For example, the first threshold and/or the second threshold may be predefined or preconfigured by a protocol.

During the relay discovery process, the first condition may include a related condition associated with the first time information. For example, the first condition may include one or more of: before a time when the serving cell stops serving a current coverage area arrives, or before a time when the serving cell stops serving a current location of the first terminal device arrives.

For example, when the serving cell is a quasi-earth fixed NTN cell, the first condition may include: before the time when the serving cell stops serving the current coverage area arrives. Alternatively, when the serving cell is an earth moving NTN cell, the first condition may include: before the time when the serving cell stops serving the current location of the first terminal device arrives.

### Relay selection/reselection

The first terminal device performs the first operation when the first condition is met as follows. The first terminal device selects or reselects the first relay device when the first condition is met.

The implementation of selecting or reselecting the first relay device by the first terminal device is not limited in embodiments of the disclosure. In an implementation, the first terminal device can select or reselect the first relay device by measuring a sidelink (PC5 link). Specifically, the first terminal device can measure a first sidelink, where the first sidelink is a sidelink between the first terminal device and the first relay device, and measurement of the first sidelink can be used for the first terminal device to select or reselect the first relay device.

During the relay selection/reselection process, the first condition may include a related condition associated with the first location information. For example, the first condition may include one or more of: a distance between the first terminal device and a reference point of the serving cell being greater than or equal to a third threshold, or a distance between the first terminal device and a satellite of the serving cell being greater than or equal to a fourth threshold.

The value of the third threshold and/or the value of the fourth threshold are not specifically limited in embodiments of the disclosure, and can be flexibly set according to actual needs.

In some embodiments, the value of the third threshold and the value of the fourth threshold may be the same. In some embodiments, the value of the third threshold and the value of the fourth threshold may be different, which is not limited in embodiments of the disclosure.

In some embodiments, the third threshold and/or the fourth threshold may be configured by the network device, for example, configured by the network device through system information or a dedicated signaling, which is not limited in embodiments of the disclosure. For example, the third threshold and/or the fourth threshold may be predefined or preconfigured by a protocol.

During the relay selection/reselection process, the first condition may include a related condition associated with the first time information. For example, the first condition may include one or more of: before a time when the serving cell stops serving a current coverage area arrives, or before a time when the serving cell stops serving a current location of the first terminal device arrives.

For example, when the serving cell is a quasi-earth fixed NTN cell, the first condition may include: before the time when the serving cell stops serving the current coverage area arrives. Alternatively, when the serving cell is an earth moving NTN cell, the first condition may include: before the time when the serving cell stops serving the current location of the first terminal device arrives.

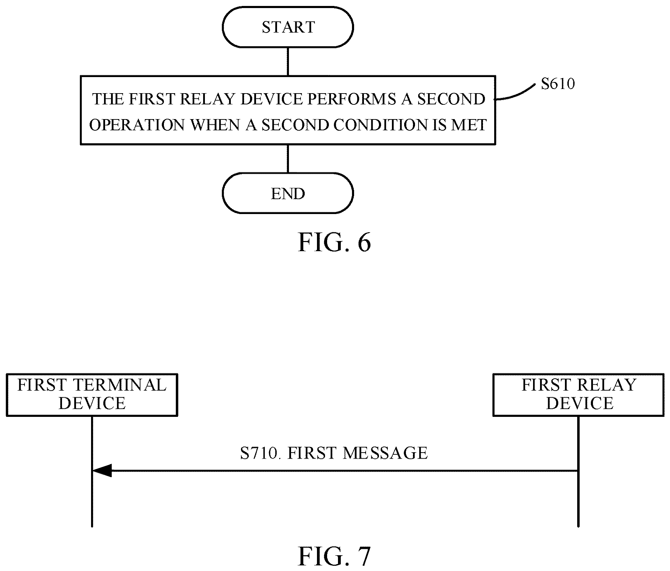

FIG. 6 is a schematic flowchart of a wireless communication method provided in another embodiment of the disclosure. The method illustrated in FIG. 6 may be performed by a first relay device. The first relay device may be, for example, the terminal device 120 illustrated in FIG. 1. In some embodiments, the first relay device may refer to a relay device accessed to an NTN. The method illustrated in FIG. 6 may include S610, which is described below.

At S610, the first relay device performs a second operation when a second condition is met.

The second operation is related to a process of accessing a network device by a first terminal device through the first relay device. In other words, the second operation is related to a sidelink relay process of accessing a network by the first terminal device. In other words, the second operation may refer to various operations involved in the sidelink relay process of accessing the network by the first terminal device.

In some embodiments, the second operation may refer to a relay discovery operation involved in the sidelink relay process of accessing the network by the first terminal device.

In some embodiments, the second operation may refer to other operations, such as measurement-related operations involved in the sidelink relay process except for the relay discovery operation.

In embodiments of the disclosure, the second condition is associated with second location information. The second location information is introduced below.

The second location information may indicate location information of the first relay device in a serving cell. In other words, the second location information may indicate a relative location relationship between the first relay device and the serving cell.

The serving cell may refer to a cell currently serving the first relay device. In some embodiments, the serving cell may refer to an NTN cell, which is not limited in embodiments of the disclosure. In some embodiments, the serving cell may be a TN cell.

The specific indication manner of the second location information is not limited in embodiments of the disclosure, as long as the second location information can indicate the location information of the first relay device in the serving cell.

In an implementation, the second location information may indicate the location information of the first relay device in the serving cell through a distance between the first relay device and the serving cell. Exemplarily, the second location information may include one or more of: a distance between the first relay device and a reference point of the serving cell, a distance between the first relay device and a satellite of the serving cell, a distance between the first relay device and the network device, etc.

The setting of the reference point of the serving cell is not specifically limited in embodiments of the disclosure. For example, the reference point of the serving cell may refer to a center position of the serving cell, which is not limited in embodiments of the disclosure. In some embodiments, the reference point of the serving cell may refer to an edge position of the serving cell, or any other position of the serving cell.

In another implementation, the second location information may indicate the location information of the first relay device in the serving cell through the location of the first relay device and the location of the serving cell. Exemplarily, the second location information may include location information of the first relay device and/or location information of the serving cell.

The location information of the first relay device may be, for example, absolute geographic location information, such as longitude and latitude. The location information of the serving cell may, for example, refer to location information of the reference point of the serving cell or location information of the satellite of the serving cell. The location information of the reference point of the serving cell or the location information of the satellite of the serving cell may also be absolute geographic location information. In this way, the relative location relationship between the first relay device and the serving cell may be calculated based on the location information of the first relay device and the location information of the serving cell. That is, the location information of the first relay device in the serving cell can be obtained.

In embodiments of the disclosure, the first relay device can perform multiple operations (second operation) involved in a sidelink relay process from the first terminal device to the network based on the second location information. That is, in embodiments of the disclosure, the second location information can be combined to reduce the influence of the inability of the measurement based on signal quality to accurately reflect the near-far effect, thereby facilitating better application to the sidelink relay process in the NTN cell.

In some embodiments, in addition to being associated with the second location information, the second condition may also be associated with other information. For example, the second condition may also be associated with signal quality information, such as signal quality information measured by the first relay device or signal quality information to be measured by the first relay device.

Exemplarily, the second condition may be associated with signal quality information of a second link measured by the first relay device, and the second link is a direct link between the first relay device and the network device.

The type of signal quality information is not limited in embodiments of the disclosure. In some embodiments, the signal quality information may include, for example, RSRP information. In some embodiments, the signal quality information may include RSRQ information, SINR information, etc.

In this way, in embodiments of the disclosure, the measurement based on signal quality and the measurement based on location can be combined to improve the rationality of the sidelink relay process in the NTN cell.

Based on the above introduction, the following takes the second operation including the relay discovery operation as an example to exemplarily introduce the second operation performed by the first relay device based on the second condition.

### Relay Discovery

FIG. 7 is a schematic flowchart of a wireless communication method provided in another embodiment of the disclosure. Referring to FIG. 7, S610 may include S710. At S710, the first relay device transmits a first message to the first terminal device or the first relay device monitors the first message, when the second condition is met. The first message is used for the first terminal device to discover the first relay device.

In some embodiments, the first message may also be referred to as a relay discovery message, a relay discovery request message, etc., which is not limited in embodiments of the disclosure.

In some embodiments, after transmitting the first message to the first terminal device, the first relay device can read and process for a remote device of interest (e.g., the first terminal device) to determine whether a sidelink connection can be established between the first relay device and the remote device.

In some embodiments, the first relay device may monitor the first message from a surrounding remote device (e.g., the first terminal device), and determine whether to respond to the first message, so as to further determine whether a sidelink connection can be established between the first relay device and the remote device.

During the relay discovery process, the second condition may include a related condition associated with the second location information. For example, the second condition may include one or more of: a distance between the first relay device and a reference point of the serving cell being greater than or equal to a fifth threshold; a distance between the first relay device and a reference point of the serving cell being less than or equal to a sixth threshold; a distance between the first relay device and a reference point of the serving cell being greater than or equal to a fifth threshold and less than or equal to a sixth threshold; a distance between the first relay device and a satellite of the serving cell being greater than or equal to a seventh threshold; a distance between the first relay device and a satellite of the serving cell being less than or equal to an eighth threshold; or a distance between the first relay device and a satellite of the serving cell being greater than or equal to a seventh threshold and less than or equal to an eighth threshold.

The values of the thresholds mentioned above (for example, the fifth threshold, the seventh threshold, etc.) are not specifically limited in embodiments of the disclosure, and can be flexibly set according to actual needs.

In some embodiments, the values of some of the thresholds mentioned above may be the same. For example, the fifth threshold and the sixth threshold may be the same, the seventh threshold and the eighth threshold may be the same, etc. In some embodiments, the values of the thresholds mentioned above may be different. For example, the fifth threshold and the sixth threshold may be different, the fifth threshold and the seventh threshold may be different, etc., which is not limited in embodiments of the disclosure.

In some embodiments, the thresholds may be configured by the network device, for example, configured by the network device through system information or a dedicated signaling, which is not limited in embodiments of the disclosure. For example, the thresholds may be predefined or preconfigured by a protocol.

For ease of understanding, several specific embodiments are given below. It should be noted that embodiments listed below are only examples and are not intended to limit the technical solutions of the disclosure.

### Embodiment 1: The first terminal device (remote device) triggers relay selection based on the first location information

In the NTN, the first terminal device may determine when to trigger relay selection based on the first location information and/or a RSRP measurement value. In an implementation, the first terminal device may perform wireless measurement of a PC5 interface based on the first location information and/or the RSRP measurement value to determine when to trigger relay selection.

In some embodiments, when any one of a condition based on the first location information and a condition based on a Uu RSRP is met, the first terminal device triggers relay selection.

In some embodiments, when both the condition based on the first location information and the condition based on the Uu RSRP are met, the first terminal device triggers relay selection.

The condition based on the first location information may include one or more of: a distance between the first terminal device and a reference point of a NTN cell being greater than threshold 1 (for example, the third threshold mentioned above), or a distance between the first terminal device and a satellite of the NTN cell being greater than threshold 2 (for example, the fourth threshold mentioned above).

The value of threshold 1 and/or the value of threshold 2 may be configured by the network device through system information or a dedicated signaling.

### Embodiment 2: The first terminal device (remote device) triggers relay selection based on the first time information

In the NTN, the first terminal device may determine when to trigger relay selection based on the first time information. In an implementation, the first terminal device may perform wireless measurement of a PC5 interface based on the first time information to determine when to trigger relay selection.

In some embodiments, for a quasi-earth fixed NTN cell, if the NTN cell broadcasts time information (e.g., t-Service) when the NTN cell will stop serving the current coverage area, the first terminal device may trigger relay selection before the moment t-Service arrives.

In some embodiments, for an earth moving NTN cell, if the first terminal device can calculate time information (e.g., t-Service-UE) when the NTN cell stops serving the current location of the first terminal device, the first terminal device may trigger relay selection before the moment t-Service-UE arrives.

### Embodiment 3: The first terminal device (remote device) and/or the first relay device (relay device) determines the transmission and/or monitoring of the first message based on the location information

In the NTN, the first terminal device and/or the first relay device may determine the transmission and/or monitoring of the first message (e.g., a relay discovery message) based on the location information. For example, the first terminal device may determine the transmission and/or monitoring of the first message based on the first location information, and the first relay device may determine to transmit and/or monitor the first message based on the second location information.

In some embodiments, when any one of a condition based on the location information and a condition based on a Uu RSRP is met, the first terminal device or the first relay device transmits and/or monitors the first message. For example, when any one of a condition based on the first location and the condition based on the Uu RSRP is met, the first terminal device transmits and/or monitors the first message. Alternatively, when any one of a condition based on the second location and the condition based on the Uu RSRP is met, the first relay device transmits and/or monitors the first message.

In some embodiments, when both the condition based on the location information and the condition based on the Uu RSRP are met, the first terminal device or the first relay device transmits and/or monitors the first message. For example, when both the condition based on the first location and the condition based on the Uu RSRP are met, the first terminal device transmits and/or monitors the first message. Alternatively, when both the condition based on the second location and the condition based on the Uu RSRP are met, the first relay device transmits and/or monitors the first message.

The condition based on the first location information may include one or more of: a distance between the first terminal device and a reference point of a NTN cell being greater than threshold 3 (for example, the first threshold mentioned above), or a distance between the first terminal device and a satellite of the NTN cell being greater than threshold 4 (for example, the second threshold mentioned above).

The value of threshold 3 and/or the value of threshold 4 may be configured by the network device through system information or a dedicated signaling.

The condition based on the second location information may include one or more of: a distance between the first relay device and a reference point of a NTN cell being greater than threshold 5 (for example, the fifth threshold mentioned above), or being less than threshold 6 (for example, the sixth threshold mentioned above), or being greater than threshold 5 and less than threshold 6, or a distance between the first relay device and a satellite of the NTN cell being greater than threshold 7 (for example, the seventh threshold mentioned above), or being less than threshold 8 (for example, the eighth threshold mentioned above), or being greater than threshold 7 and less than threshold 8.

The values of the above thresholds (such as threshold 5 to threshold 8) may be configured by the network device through system information or a dedicated signaling.

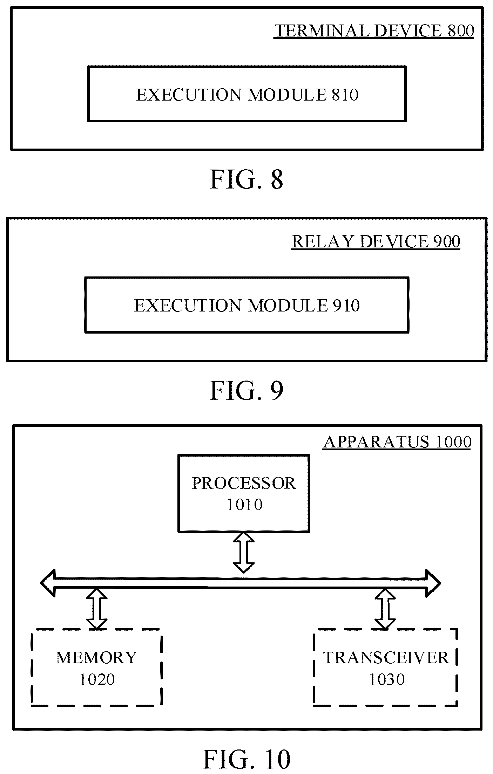

The above describes method embodiments of the disclosure in detail in combination with FIGs. 1 to 7, and the following describes apparatus embodiments of the disclosure in detail in combination with FIGs. 8 to 10. It should be understood that the description of method embodiments corresponds to the description of apparatus embodiments, and therefore, the part not described in detail may refer to previous method embodiments.

FIG. 8 is a schematic structural diagram of a terminal device provided in embodiments of the disclosure. A terminal device 800 illustrated in FIG. 8 may be any of above first terminal devices. The terminal device 800 may include an execution module 810.

The execution module 810 can be configured to perform a first operation when a first condition is met, where the first operation is related to a process of accessing a network device by the first terminal device through a first relay device. The first condition is associated with first location information and/or first time information. The first location information indicates location information of the first terminal device in a serving cell. The first time information indicates time information when the serving cell serves or stops serving the first terminal device.

Optionally, the first location information includes one or more of: a distance between the first terminal device and a reference point of the serving cell, or a distance between the first terminal device and a satellite of the serving cell.

Optionally, the first time information includes one or more of: time information when the serving cell serves or stops serving a current coverage area, or time information when the serving cell serves or stops serving a current location of the first terminal device.

Optionally, the execution module 810 is further configured to: transmit a first message to the first relay device or monitor the first message, when the first condition is met, where the first message is used for the first terminal device to discover the first relay device.

Optionally, the first condition includes one or more of: a distance between the first terminal device and a reference point of the serving cell being greater than or equal to a first threshold, or a distance between the first terminal device and a satellite of the serving cell being greater than or equal to a second threshold.

Optionally, the execution module 810 is further configured to: select or reselect the first relay device when the first condition is met.

Optionally, the first condition includes one or more of: a distance between the first terminal device and a reference point of the serving cell being greater than or equal to a third threshold; a distance between the first terminal device and a satellite of the serving cell being greater than or equal to a fourth threshold; before a time when the serving cell stops serving a current coverage area arrives; or before a time when the serving cell stops serving a current location of the first terminal device arrives.

Optionally, the execution module 810 is further configured to: measure a first sidelink, where the first sidelink is a sidelink between the first terminal device and the first relay device, and measurement of the first sidelink is used for the first terminal device to select or reselect the first relay device.

Optionally, the first condition is associated with signal quality information of a first link measured by the first terminal device, and the first link is a direct link between the first terminal device and the network device.

Optionally, the serving cell is a non-terrestrial network (NTN) cell.

Optionally, the execution module 810 may be a processor 1010. The terminal device 800 may further include a transceiver 1030 and a memory 1020, as specifically illustrated in FIG. 10.

FIG. 9 is a schematic structural diagram of a relay device provided in embodiments of the disclosure. A relay device 900 illustrated in FIG. 9 may be any of above first relay devices. The relay device 900 may include an execution module 910.

The execution module 910 can be configured to perform a second operation when a second condition is met, where the second operation is related to a process of accessing a network device by a first terminal device through the first relay device. The second condition is associated with second location information. The second location information indicates location information of the first relay device in a serving cell.

Optionally, the second location information includes one or more of: a distance between the first relay device and a reference point of the serving cell; or a distance between the first relay device and a satellite of the serving cell.

Optionally, the execution module 910 is further configured to: transmit a first message to the first terminal device or monitor the first message, when the second condition is met, where the first message is used for the first terminal device to discover the first relay device.

Optionally, the second condition includes one or more of: a distance between the first relay device and a reference point of the serving cell being greater than or equal to a fifth threshold; a distance between the first relay device and a reference point of the serving cell being less than or equal to a sixth threshold; a distance between the first relay device and a reference point of the serving cell being greater than or equal to a fifth threshold and less than or equal to a sixth threshold; a distance between the first relay device and a satellite of the serving cell being greater than or equal to a seventh threshold; a distance between the first relay device and a satellite of the serving cell being less than or equal to an eighth threshold; or a distance between the first relay device and a satellite of the serving cell being greater than or equal to a seventh threshold and less than or equal to an eighth threshold.

Optionally, the second condition is associated with signal quality information of a second link measured by the first relay device, and the second link is a direct link between the first relay device and the network device.

Optionally, the serving cell is a non-terrestrial network (NTN) cell.

Optionally, the execution module 910 may be a processor 1010. The relay device 900 may further include a transceiver 1030 and a memory 1020, as specifically illustrated in FIG. 10.

FIG. 10 is a schematic structural diagram of a communication apparatus according to embodiments of the disclosure. The dotted line in FIG. 10 indicates that the unit or module is optional. The apparatus 1000 may be configured to perform the method described in above method embodiments. The apparatus 1000 may be a chip, a terminal device, or a network device.

The apparatus 1000 may include one or more processors 1010. The processor 1010 may support the apparatus 1000 to implement the methods described in the above method embodiments. The processor 1010 may be a universal processor or a special-purpose processor. For example, the processor may be a central processing unit (CPU). Alternatively, the processor may also be such as a general-purpose processor, a digital signal processor (DSP), an application specific integrated circuit (ASIC), a field programmable gate array (FPGA) or another programmable logical device, a discrete gate or a transistor logical device, or a discrete hardware component. The universal processor may be a microprocessor or the processor may also be any conventional processor and the like.

The apparatus 1000 may further include one or more memories 1020. The memory 1020 has stored thereon a program that may be executed by the processor 1010 to enable the processor 1010 to implement the methods described in the above method embodiments. The memory 1020 may be a device independent from the processor 1010, or may be integrated in the processor 1010.

The apparatus 1000 may further include a transceiver 1830. The processor 1010 may communicate with another device or chip through the transceiver 1830. For example, the processor 1010 may transmit/receive data to/from another device or chip through the transceiver 1830.

Embodiments of the disclosure further provide a computer-readable storage medium for storing a program. The computer-readable storage medium may be applied to a terminal device or a network device according to the embodiments of the disclosure, and the program enables a computer to implement the method that is implemented by the terminal device or the network device in various embodiments of the disclosure.

Embodiments of the disclosure further provide a computer program product. The computer program product includes a program. The computer program product may be applied to a terminal device or a network device according to the embodiments of the disclosure, and the program enables a computer to implement the method that is implemented by the terminal device or the network device in various embodiments of the disclosure.

Embodiments of the disclosure further provide a computer program. The computer program may be applied to a terminal device or a network device according to the embodiments of the disclosure, and the computer program enables a computer to implement the method that is implemented by the terminal device or the network device in various embodiments of the disclosure.

It is to be understood that the terms "system" and "network" in the disclosure may be used interchangeably. In addition, the terms used in the disclosure are intended for explaining specific embodiments of the disclosure only, rather than limiting. The terms such as "first", "second", "third" and "fourth" in the description, claims and appended drawings of the disclosure are used to distinguish different objects, rather than describing specific orders. Furthermore, the terms "comprise/include/contain" and "have" as well as any variants thereof are intended to cover non-exclusive inclusions.

"Indicate/indicating/indication" referred to in the embodiments of the disclosure may be direct indication or indirect indication, or may refer to that there is an association relationship. By way of example, "A indicates B" may refer to that A directly indicates B, for example, B may be acquired through A. "A indicates B" may also refer to that A indirectly indicates B, for example, A indicates C and B may be acquired through C. "A indicates B" may also refer to that there is an association relationship between A and B.

In the embodiments of the disclosure, "B corresponding to A" means that B is associated with A, and B may be determined based on A. However, it is also be understood that determining B based on A does not mean that B is determined only based on A, but B may also be determined from A and/or other information.

In the embodiments of the disclosure, the term "correspond/corresponding/ correspondence" may mean that there is a direct correspondence or indirect correspondence between two objects, or may mean that there is an association relationship between the two objects, or may mean a relationship between indication and being indicated or a relationship between configuration and being configured.

In the embodiments of the disclosure, "predefined" or "preconfigured" may be achieved by pre-storing corresponding codes, tables or other means used for indicating relevant information in devices (e.g., including terminal devices and network devices), and the present disclosure is not limited to the specific implementation thereof. For example, "predefined" may refer to being defined in a protocol.

In the embodiments of the disclosure, the "protocol" may refer to specification protocols in the field of communications, for example, long-term evolution (LTE) protocols, new radio (NR) protocols or relevant protocols applied in future communication systems, which is not limited in the embodiments of the disclosure.

In the embodiments of the disclosure, the term "and/or" herein merely describes a relation between associated objects, representing that three relations may exist. For example, A and/or B may represent the following three cases: existence of A alone, existence of both A and B, and existence of B alone. The character "/" generally indicates that the associated objects before and after this character is in an "or" relationship.

In the embodiments of the disclosure, the sizes of the serial numbers of the above operations do not imply the sequential order in which the operations are performed, and shall not construct any limitation to the implementation of the embodiments of the disclosure. The order in which the operations are performed should be decided by their functions and internal logics.

In some embodiments provided in the disclosure, it is to be understood that the disclosed systems, devices and methods may be implemented in other ways. For example, the device embodiments described above are only exemplary, and for example, division of the units is only division in logic functions, and division may be made in other ways during practical implementation. For example, multiple units or components may be combined or integrated into another system, or some features may be neglected or not executed. In addition, coupling or direct coupling or communication connection between various displayed or discussed components may be indirect coupling or communication connection, implemented through some interfaces, devices or units, and may be electrical, mechanical or in other forms.

The units described as separate components may or may not be physically discrete from one another. Components displayed as units may or may not be physical units, and may be located at the same place or may be distributed to multiple network units. Some or all of the units may be chosen to realize the purpose of the solution of the embodiments according to actual requirements.

Additionally, various functional units in the embodiments of the disclosure may be integrated in one processing unit, or may exist separately physically; or two or more units may be integrated in one unit.

The above embodiments may be implemented by software, hardware, firmware or any combination thereof completely or in part. When software is used, the embodiments may be implemented in form of a computer program product completely or in part. The computer program product includes one or more computer instructions. The computer program instructions, when loaded and executed by a computer, produce the procedures or functions according to the embodiments of the disclosure completely or in part. The computer may be a universal computer, a dedicated computer, a computer network, or other programmable devices. The computer instructions may be stored in a computer-readable storage medium, or may be transmitted from a computer-readable storage medium to another computer-readable storage medium, for example, the computer instructions may be transmitted from a network station, computer, server or data center to another network station, computer, server or data center in a wired (e.g., coaxial cable, fiber, digital subscriber line (DSL)) or wireless (e.g., infrared, radio, microwaves) manner. The computer-readable storage medium may be any available medium readable by a computer or may be a data storage device containing a server, a data center or the like integrated by one or more available mediums. The available medium may be a magnetic medium (e.g., a floppy disk, a hard disk, and a magnetic tape), an optical medium (e.g., a digital video disk (DVD)), a semiconductor medium (e.g., a solid state disk (SSD)), or the like.

The above descriptions are merely specific implementations of the disclosure, but the scope of protection of the disclosure is not limited thereto. Any modification or replacement that are easily conceivable by those familiar with the related art within the technical range disclosed by the disclosure shall fall within the scope of protection of the disclosure. Therefore, the scope of protection of the disclosure should be subject to the scope of protection of the claims.

## Claims

1. A wireless communication method, comprising:
performing, by a first terminal device, a first operation when a first condition is met, wherein the first operation is related to a process of accessing a network device by the first terminal device through a first relay device, wherein
the first condition is associated with first location information and/or first time information, the first location information indicates location information of the first terminal device in a serving cell, and the first time information indicates time information when the serving cell serves or stops serving the first terminal device.

2. The method of claim 1, wherein the first location information comprises one or more of:
a distance between the first terminal device and a reference point of the serving cell; or
a distance between the first terminal device and a satellite of the serving cell.

3. The method of claim 1 or 2, wherein the first time information comprises one or more of:
time information when the serving cell serves or stops serving a current coverage area; or
time information when the serving cell serves or stops serving a current location of the first terminal device.

4. The method of any of claims 1 to 3, wherein performing, by the first terminal device, the first operation when the first condition is met comprises:
transmitting, by the first terminal device, a first message to the first relay device or monitoring, by the first terminal device, the first message, when the first condition is met, wherein the first message is used for the first terminal device to discover the first relay device.

5. The method of claim 4, wherein the first condition comprises one or more of:
a distance between the first terminal device and a reference point of the serving cell being greater than or equal to a first threshold; or
a distance between the first terminal device and a satellite of the serving cell being greater than or equal to a second threshold.

6. The method of any of claims 1 to 3, wherein performing, by the first terminal device, the first operation when the first condition is met comprises:
selecting or reselecting, by the first terminal device, the first relay device when the first condition is met.

7. The method of claim 6, wherein the first condition comprises one or more of:
a distance between the first terminal device and a reference point of the serving cell being greater than or equal to a third threshold;
a distance between the first terminal device and a satellite of the serving cell being greater than or equal to a fourth threshold;
before a time when the serving cell stops serving a current coverage area arrives; or
before a time when the serving cell stops serving a current location of the first terminal device arrives.

8. The method of claim 6 or 7, wherein selecting or reselecting, by the first terminal device, the first relay device comprises:
measuring, by the first terminal device, a first sidelink, wherein the first sidelink is a sidelink between the first terminal device and the first relay device, and measurement of the first sidelink is used for the first terminal device to select or reselect the first relay device.

9. The method of any of claims 1 to 8, wherein the first condition is associated with signal quality information of a first link measured by the first terminal device, and the first link is a direct link between the first terminal device and the network device.

10. The method of any of claims 1 to 9, wherein the serving cell is a non-terrestrial network (NTN) cell.

11. A wireless communication method, comprising:
performing, by a first relay device, a second operation when a second condition is met, wherein the second operation is related to a process of accessing a network device by a first terminal device through the first relay device, wherein
the second condition is associated with second location information, and the second location information indicates location information of the first relay device in a serving cell.

12. The method of claim 11, wherein the second location information comprises one or more of:
a distance between the first relay device and a reference point of the serving cell; or
a distance between the first relay device and a satellite of the serving cell.

13. The method of claim 11 or 12, wherein performing, by the first relay device, the second operation when the second condition is met comprises:
transmitting, by the first relay device, a first message to the first terminal device or monitoring, by the first relay device, the first message, when the second condition is met, wherein the first message is used for the first terminal device to discover the first relay device.

14. The method of claim 13, wherein the second condition comprises one or more of:
a distance between the first relay device and a reference point of the serving cell being greater than or equal to a fifth threshold;
a distance between the first relay device and a reference point of the serving cell being less than or equal to a sixth threshold;
a distance between the first relay device and a reference point of the serving cell being greater than or equal to a fifth threshold and less than or equal to a sixth threshold;
a distance between the first relay device and a satellite of the serving cell being greater than or equal to a seventh threshold;
a distance between the first relay device and a satellite of the serving cell being less than or equal to an eighth threshold; or
a distance between the first relay device and a satellite of the serving cell being greater than or equal to a seventh threshold and less than or equal to an eighth threshold.

15. The method of any of claims 11 to 14, wherein the second condition is associated with signal quality information of a second link measured by the first relay device, and the second link is a direct link between the first relay device and the network device.

16. The method of any of claims 11 to 15, wherein the serving cell is a non-terrestrial network (NTN) cell.

17. A terminal device, being a first terminal device and comprising:
an execution module configured to perform a first operation when a first condition is met, wherein the first operation is related to a process of accessing a network device by the first terminal device through a first relay device, wherein
the first condition is associated with first location information and/or first time information, the first location information indicates location information of the first terminal device in a serving cell, and the first time information indicates time information when the serving cell serves or stops serving the first terminal device.

18. The terminal device of claim 17, wherein the first location information comprises one or more of:
a distance between the first terminal device and a reference point of the serving cell; or
a distance between the first terminal device and a satellite of the serving cell.

19. The terminal device of claim 17 or 18, wherein the first time information comprises one or more of:
time information when the serving cell serves or stops serving a current coverage area; or
time information when the serving cell serves or stops serving a current location of the first terminal device.

20. The terminal device of any of claims 17 to 19, wherein the execution module is further configured to:
transmit a first message to the first relay device or monitor the first message, when the first condition is met, wherein the first message is used for the first terminal device to discover the first relay device.

21. The terminal device of claim 20, wherein the first condition comprises one or more of:
a distance between the first terminal device and a reference point of the serving cell being greater than or equal to a first threshold; or
a distance between the first terminal device and a satellite of the serving cell being greater than or equal to a second threshold.

22. The terminal device of any of claims 17 to 19, wherein the execution module is further configured to:
select or reselect the first relay device when the first condition is met.

23. The terminal device of claim 22, wherein the first condition comprises one or more of:
a distance between the first terminal device and a reference point of the serving cell being greater than or equal to a third threshold;
a distance between the first terminal device and a satellite of the serving cell being greater than or equal to a fourth threshold;
before a time when the serving cell stops serving a current coverage area arrives; or
before a time when the serving cell stops serving a current location of the first terminal device arrives.

24. The terminal device of claim 22 or 23, wherein the execution module is further configured to:
measure a first sidelink, wherein the first sidelink is a sidelink between the first terminal device and the first relay device, and measurement of the first sidelink is used for the first terminal device to select or reselect the first relay device.

25. The terminal device of any of claims 17 to 24, wherein the first condition is associated with signal quality information of a first link measured by the first terminal device, and the first link is a direct link between the first terminal device and the network device.

26. The terminal device of any of claims 17 to 25, wherein the serving cell is a non-terrestrial network (NTN) cell.

27. A relay device, being a first relay device and comprising:
an execution module configured to perform a second operation when a second condition is met, wherein the second operation is related to a process of accessing a network device by a first terminal device through the first relay device, wherein
the second condition is associated with second location information, and the second location information indicates location information of the first relay device in a serving cell.

28. The relay device of claim 27, wherein the second location information comprises one or more of:
a distance between the first relay device and a reference point of the serving cell; or
a distance between the first relay device and a satellite of the serving cell.

29. The relay device of claim 27 or 28, wherein the execution module is further configured to:
transmit a first message to the first terminal device or monitor the first message, when the second condition is met, wherein the first message is used for the first terminal device to discover the first relay device.

30. The relay device of claim 29, wherein the second condition comprises one or more of:
a distance between the first relay device and a reference point of the serving cell being greater than or equal to a fifth threshold;
a distance between the first relay device and a reference point of the serving cell being less than or equal to a sixth threshold;
a distance between the first relay device and a reference point of the serving cell being greater than or equal to a fifth threshold and less than or equal to a sixth threshold;
a distance between the first relay device and a satellite of the serving cell being greater than or equal to a seventh threshold;
a distance between the first relay device and a satellite of the serving cell being less than or equal to an eighth threshold; or
a distance between the first relay device and a satellite of the serving cell being greater than or equal to a seventh threshold and less than or equal to an eighth threshold.

31. The relay device of any of claims 27 to 30, wherein the second condition is associated with signal quality information of a second link measured by the first relay device, and the second link is a direct link between the first relay device and the network device.

32. The relay device of any of claims 27 to 31, wherein the serving cell is a non-terrestrial network (NTN) cell.

33. A terminal device comprising a memory and a processor, wherein the memory is configured to store programs, and the processor is configured to invoke the programs in the memory to cause the terminal device to perform the method of any of claims 1 to 10.

34. A relay device comprising a memory and a processor, wherein the memory is configured to store programs, and the processor is configured to invoke the programs in the memory to cause the relay device to perform the method of any of claims 11 to 16.

35. An apparatus comprising a processor configured to invoke programs from a memory to cause the apparatus to perform the method of any of claims 1 to 16.

36. A chip comprising a processor configured to invoke programs from a memory to cause a device equipped with the chip to perform the method of any of claims 1 to 16.

37. A computer-readable storage medium storing programs thereon, wherein the programs are operable with a computer to perform the method of any of claims 1 to 16.

38. A computer program product comprising programs, wherein the programs are operable with a computer to perform the method of any of claims 1 to 16.

39. A computer program operable with a computer to perform the method of any of claims 1 to 16.
